(19) **Europäisches Patentamt / European Patent Office / Office européen des brevets**

(11) **EP 4 727 041 A1**

(12) **EUROPEAN PATENT APPLICATION**
published in accordance with Art. 153(4) EPC

(43) Date of publication:
**15.04.2026 Bulletin 2026/16**

(21) Application number: **23940189.6**

(22) Date of filing: **09.06.2023**

(51) International Patent Classification (IPC):
**H04L 1/00** $^{(2006.01)}$      **H04W 72/231** $^{(2023.01)}$

(52) Cooperative Patent Classification (CPC):
**H04L 1/00; H04L 5/00; H04W 72/231**

(86) International application number:
**PCT/CN2023/099553**

(87) International publication number:
**WO 2024/250307 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **WU, Shijuan**
**Beijing 100085 (CN)**

(74) Representative: **Dehns Germany Partnerschaft mbB**
**Theresienstraße 6-8**
**80333 München (DE)**

(54) **SIGNAL RECEIVING METHOD AND APPARATUS, AND SIGNAL SENDING METHOD AND APPARATUS**

(57)      The present disclosure provides a signal receiving method and apparatus, and a signal sending method and apparatus. The signal receiving method comprises : receiving an indication signaling sent by a network device, the indication signaling being used for determining a first space unit model activated by the network device; determining first ports in an activated state under the first space unit model; on the basis of a mapping relationship between different ports and different resource elements (REs), determining a first RE corresponding to each of the first ports; and receiving on each of the first REs a downlink signal sent by the network device by means of the corresponding first port. The present disclosure supports the network device to dynamically adjust the number of ports in the activated state, such that the transmission of downlink signals is more flexible, thus achieving high availability.

FIG. 2

EP 4 727 041 A1

**Description**

**TECHNICAL FIELD**

The present disclosure relates to the field of communications, and in particular to a method and apparatus for receiving a signal, and a method and apparatus for sending a signal.

**BACKGROUND**

At present, a network device can send to a terminal, through signaling, the number of ports used by it when transmitting a downlink signal. However, if the network device dynamically adjusts, based on transmission load, its own energy consumption, service requirements or the like, the number of ports used for transmitting the downlink signal, there is still no solution for how the terminal determines the corresponding receiving resource.

SUMMARY

To overcome the problems existing in the related arts, embodiments of the present disclosure provide a method and apparatus for receiving a signal, and a method and apparatus for sending a signal.
According to a first aspect of embodiments of the present disclosure, there is provided a method for receiving a signal, including:

receiving indication signaling sent by a network device, wherein the indication signaling is configured to determine a first spatial element pattern activated by the network device;
determining a first port that is active in the first spatial element pattern;
determining, based on a mapping relationship between different ports and different Resource Elements (REs), a first RE corresponding to each first port; and
receiving, on each first RE, a downlink signal sent by the network device through a corresponding first port.

In some embodiments, the indication signaling is configured to indicate:
a first bitmap, wherein each bit included in the first bitmap corresponds to a state of a port group, and each port group includes one or more ports.
In some embodiments, the method further includes:

determining, based on first configuration signaling sent by the network device, a plurality of spatial element patterns; or
determining, based on a protocol predefined manner, the plurality of spatial element patterns.

In some embodiments, the first configuration signaling includes at least one of:

first Radio Resource Control (RRC) signaling; or
a first Media Access Control Control Element (MAC CE).

In some embodiments, the indication signaling is configured to indicate:
a first index value, wherein the first index value is an index value in an index value set, and index values included in the index value set are in a one-to-one correspondence with the plurality of spatial element patterns.
In some embodiments, the method further includes:
determining a spatial element pattern corresponding to the first index value from the plurality of spatial element patterns as the first spatial element pattern.
In some embodiments, the first spatial element pattern corresponds to a first bitmap, each bit included in the first bitmap corresponds to a state of a port group, and each port group includes one or more ports.
In some embodiments, determining the first port that is active in the first spatial element pattern includes:

determining a port group whose bit value is a first value in the first bitmap as a first port group; and
determining a port included in the first port group as the first port that is active.

In some embodiments, the method further includes:

determining, based on second configuration signaling sent by the network device, a set of numbers of ports; or
determining, based on a protocol predefined manner, the set of numbers of ports.

In some embodiments, the second configuration signaling includes at least one of:

second RRC signaling; or
a second MAC CE.

In some embodiments, the indication signaling is configured to indicate:
a first number, wherein the first number is a number in the set of numbers of ports.
In some embodiments, determining the first port that is active in the first spatial element pattern includes:

determining the first number of ports in descending or ascending order of port numbers; and
determining the first number of ports as the first port that is active.

In some embodiments, the indication signaling includes at least one of:

a third MAC CE; or
Downlink Control Information (DCI).

In some embodiments, the indication signaling includes at least one of:

UE-specific signaling;
signaling common to a plurality of terminals within the same cell; or
signaling common to a plurality of terminals within the same terminal group.

In some embodiments, the downlink signal is a periodically transmitted downlink signal, and the method further includes:
in response to receiving third configuration signaling but not receiving the indication signaling, receiving the downlink signal on each second RE, wherein the third configuration signaling is configured to configure the number of ports for the network device to transmit the downlink signal, each second RE is determined based on each second port that is active, and the number of second ports is equal to the number of ports.
In some embodiments, the downlink signal is a semi-persistent scheduling downlink signal, or the downlink signal is an aperiodically transmitted downlink signal, and the method further includes:
in response to receiving third configuration signaling but not receiving triggering signaling, not receiving the downlink signal, wherein the third configuration signaling message is configured to configure the number of ports for the network device to transmit the downlink signal, and the triggering signaling is configured to trigger the terminal to receive the downlink signal.
In some embodiments, the method further includes:
in response to receiving the triggering signaling but not receiving the indication signaling, receiving the downlink signal on each second RE, each second RE is determined based on each second port that is active, and the number of second ports is equal to the number of ports.
In some embodiments, the method further includes:
in response to receiving the triggering signaling but not receiving the indication signaling, not receiving the downlink signal.
In some embodiments, the triggering signaling and the indication signaling are the same signaling.
According to a second aspect of embodiments of the present disclosure, there is provided a method for sending a signal, including:

determining a first spatial element pattern that is activated;
sending indication signaling to a terminal, wherein the indication signaling is configured to determine the first spatial element pattern activated by the network device;
determining, based on a mapping relationship between different ports and different Resource Elements (REs), a first RE corresponding to each first port, wherein the first port is a port that is active in the first spatial element pattern; and
sending, on each first RE, a downlink signal to the terminal through a corresponding first port.

In some embodiments, the indication signaling is configured to indicate:
a first bitmap, wherein each bit included in the first bitmap corresponds to a state of a port group, and each port group includes one or more ports.
In some embodiments, the method further includes:

sending first configuration signaling to the terminal, wherein the first configuration signaling is configured to configure a plurality of spatial element patterns; or,
determining, based on a protocol predefined manner, the plurality of spatial element patterns.

In some embodiments, the first configuration signaling includes at least one of:

first Radio Resource Control (RRC) signaling; or
a first Media Access Control Control Element (MAC CE).

In some embodiments, determining the first spatial element pattern includes:

determining the first spatial element pattern from the plurality of spatial element patterns; and
the method further includes:
determining a first index value corresponding to the first spatial element pattern in an index value set, wherein index values included in the index value set are in a one-to-one correspondence with the plurality of spatial element patterns.

In some embodiments, the indication signaling is configured to indicate:
the first index value.
In some embodiments, the first spatial element pattern corresponds to a first bitmap, each bit included in the first bitmap corresponds to a state of a port group, and each port group includes one or more ports.
In some embodiments, in the first bitmap, a bit value corresponding to a port group to which the first port belongs is a first value.
In some embodiments, the method further includes:

sending second configuration signaling to the terminal, wherein the second configuration signaling is configured to configure a set of numbers of ports; or
determining, based on a protocol predefined manner, the set of numbers of ports.

In some embodiments, the second configuration signaling includes at least one of:

second RRC signaling; or
a second MAC CE.

In some embodiments, the method further includes:

determining the first number of ports in descending or ascending order of port numbers; and
determining the first number of ports as the first port that is active.

In some embodiments, the indication signaling is configured to indicate:
the first number.
In some embodiments, the indication signaling includes at least one of:

a third MAC CE; or
Downlink Control Information (DCI).

In some embodiments, the indication signaling includes at least one of:

UE-specific signaling;
signaling common to a plurality of terminals within the same cell; or
signaling common to a plurality of terminals within the same terminal group.

In some embodiments, the downlink signal is a periodically transmitted downlink signal, and the method further includes:
in response to sending third configuration signaling to the terminal but not sending the indication signaling, sending the downlink signal to the terminal on each second RE, wherein the third configuration signaling is configured to configure the number of ports for the network device to transmit the downlink signal, each second RE is determined based on each second port that is active, and the number of second ports is equal to the number of ports.
In some embodiments, the downlink signal is a semi-persistent scheduling downlink signal, or the downlink signal is an aperiodically transmitted downlink signal, and the method further includes:

in response to sending third configuration signaling to the terminal but not sending the triggering signaling, not sending the downlink signal to the terminal, wherein the third configuration signaling message is configured to configure the number of ports for the network device to transmit the downlink signal, and the triggering signaling is configured to trigger the terminal to receive the downlink signal.

In some embodiments, the method further includes:

in response to sending the triggering signaling to the terminal but not sending the indication signaling, sending the downlink signal to the terminal on each second RE, each second RE is determined based on each second port that is active, and the number of second ports is equal to the number of ports.

In some embodiments, the method further includes:

in response to sending the triggering signaling to the terminal but not sending the indication signaling, not sending the downlink signal to the terminal.

In some embodiments, the triggering signaling and the indication signaling are the same signaling.

According to a third aspect of embodiments of the present disclosure, there is provided an apparatus for receiving a signal, including:

a first receiving module, configured to receive indication signaling sent by a network device, wherein the indication signaling is configured to determine a first spatial element pattern activated by the network device;
a first determination module, configured to determine a first port that is active in the first spatial element pattern;
a second determination module, configured to determine, based on a mapping relationship between different ports and different Resource Elements (REs), a first RE corresponding to each first port; and
a second receiving module, configured to receive, on each first RE, a downlink signal sent by the network device through a corresponding first port.

According to a fourth aspect of embodiments of the present disclosure, there is provided an apparatus for sending a signal, including:

a third determination module, configured to determine a first spatial element pattern that is activated;
a first sending module, configured to send indication signaling to a terminal, wherein the indication signaling is configured to determine the first spatial element pattern activated by the network device;
a fourth determination module, configured to determine, based on a mapping relationship between different ports and different Resource Elements (REs), a first RE corresponding to each first port, wherein the first port is a port that is active in the first spatial element pattern; and
a second sending module, configured to send, on each first RE, a downlink signal to the terminal through a corresponding first port.

According to a fifth aspect of embodiments of the present disclosure, there is provided a computer-readable storage medium having a computer program stored thereon, wherein the computer program is configured to perform the method for receiving the signal described in any of the first aspects above.

According to a sixth aspect of embodiments of the present disclosure, there is provided a computer-readable storage medium having a computer program stored thereon, wherein the computer program is configured to perform the method for sending the signal described in any of the second aspects above.

According to a seventh aspect of embodiments of the present disclosure, there is provided an apparatus for receiving a signal, including:

a processor; and
a memory configured to store executable instructions of the processor;
wherein the processor is configured to perform the method for receiving the signal described in any of the first aspects above.

According to an eighth aspect of embodiments of the present disclosure, there is provided an apparatus for sending a signal, including:

a processor; and
a memory configured to store executable instructions of the processor;
wherein the processor is configured to perform the method for receiving the signal described in any of the second aspects above.

The technical solutions provided by the embodiments of the present disclosure may include the following beneficial effects:

in the embodiments of the present disclosure, the terminal can determine in real time, based on the indication signaling sent by the network device, the first spatial element pattern activated by the network device, thereby determining the receiving resource for the downlink signal, supporting the network device to dynamically adjust the number of ports in the active state, making the transmission of the downlink signal more flexible and highly available.

It should be noted that the above general description and the following detailed description are merely exemplary and explanatory and should not be construed as limiting of the present disclosure.

**BRIEF DESCRIPTION OF THE DRAWINGS**

The accompanying drawings, which are incorporated in and constitute a part of this specification, illustrate embodiments consistent with the present disclosure and, together with the description, serve to explain the principles of the present disclosure.

FIG. 1 shows a schematic diagram of an NES scenario according to an example embodiment.
FIG. 2 shows a schematic flowchart of a method for receiving a signal according to an example embodiment.
FIG. 3 shows a schematic diagram of a CSI-RS resource mapping according to an example embodiment.
FIG. 4 shows a schematic flowchart of another method for receiving a signal according to an example embodiment.
FIG. 5A shows a schematic flowchart of another method for receiving a signal according to an example embodiment.
FIG. 5B shows a schematic flowchart of another method for receiving a signal according to an example embodiment.
FIG. 5C shows a schematic flowchart of another method for receiving a signal according to an example embodiment.
FIG. 6 shows a schematic flowchart of a method for sending a signal according to an example embodiment.
FIG. 7 shows a schematic flowchart of another method for sending a signal according to an example embodiment.
FIG. 8A shows a schematic flowchart of another method for sending a signal according to an example embodiment.
FIG. 8B shows a schematic flowchart of another method for sending a signal according to an example embodiment.
FIG. 8C shows a schematic flowchart of another method for sending a signal according to an example embodiment.
FIG. 9 shows a schematic diagram of another CSI-RS resource mapping according to an example embodiment.
FIG. 10 shows a block diagram of an apparatus for receiving a signal according to an example embodiment.
FIG. 11 shows a block diagram of an apparatus for sending a signal according to an example embodiment.
FIG. 12 shows a schematic structural diagram of an apparatus for receiving a signal according to an example embodiment of the present disclosure.
FIG. 13 shows a schematic structural diagram of an apparatus for sending a signal according to an example embodiment of the present disclosure.

**DETAILED DESCRIPTION**

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the present disclosure. Instead, they are merely examples of apparatuses and methods consistent with some aspects related to the present disclosure as recited in the appended claims.

The terms used in the present disclosure are merely for the purpose of describing particular embodiments and are not intended to limit the present disclosure. As used in the present disclosure and the appended claims, the singular forms "a", "the" and "said" are intended to include the plural forms as well, unless the context clearly indicates otherwise. It should also be understood that the term "and/or" as used herein refers to and includes any or all possible combinations of at least one associated listed items.

It should be understood that, although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the word "if" as used herein can be interpreted as "upon" or "when" or "in response to determination".

In a Release-18 (Rel-18) Network Energy Saving (NES) mode, in order to reduce the power consumption of network devices, the network devices can dynamically reduce, based on the dynamic changes in transmission load, the number of spatial elements corresponding to the downlink data transmission, thereby reducing network energy consumption.

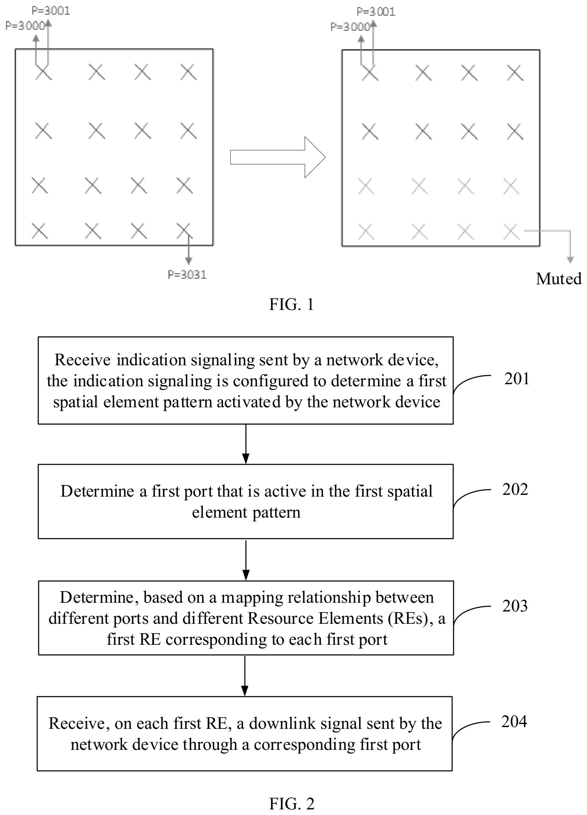

In an embodiment, the network device reduces the number of spatial elements for transmission, which causes the reduction in the number of ports for transmitting the downlink signal. For example, as shown in FIG. 1, the network device previously used 32 ports, i.e., ports with port numbers 3000 to 3031, to transmit the downlink signal. After enabling the NES mode, the network device only uses the first 16 ports, i.e., ports with port numbers 3000 to 3015, to transmit the downlink signal.

It is impossible for the terminal to determine in a timely manner whether the network device has enabled or disabled the NES mode, which in turn makes it impossible for the terminal to determine a resource location to receive the downlink signal.

In order to address the aforementioned technical problems, the present disclosure provides a method and apparatus for receiving a signal, a method and apparatus for sending a signal, and a storage medium in the following. The terminal can determine in real time, based on the indication signaling sent by the network device, the first spatial element pattern activated by the network device, thereby determining the receiving resource for the downlink signal, supporting the network device to dynamically adjust the number of ports in the active state, and making the transmission of the downlink signal more flexible, with high availability.

In the following, the method for receiving the signal provided in the present disclosure will be introduced from the terminal side first.

Embodiments of the present disclosure provide a method for receiving a signal. Referring to FIG. 2, which shows a flowchart of a method for receiving a signal according to an embodiment, the method may be executed by a terminal and may include steps 201 to 204.

Embodiments of the present disclosure provide a method for receiving a signal. Referring to FIG. 2, which shows a flowchart of a method for receiving a signal according to an embodiment, the method may be executed by a terminal and may include steps 201 to 204.

In the step 201, indication signaling sent by a network device is received, and the indication signaling is used to determine a first spatial element pattern activated by the network device.

In embodiments of the present disclosure, the spatial element pattern refers to a pattern used by the network device when transmitting the downlink signal through a spatial element. The spatial element includes, but is not limited to, a port of the network device. It should be noted that the port involved in the present disclosure refers to an antenna port.

In an implementation, the indication signaling may include a third Media Access Control Control Element (MAC CE).

In another implementation, the indication signaling may include Downlink Control Information (DCI).

In an implementation, the indication signaling may include UE-specific signaling. For example, the indication signaling may include a UE-specific third MAC CE or UE-specific DCI.

In another implementation, the indication signaling may include signaling common to a plurality of terminals within the same cell, i.e., cell-specific signaling. For example, the indication signaling may include a third MAC CE common to the plurality of terminals within the same cell, or DCI common to the plurality of terminals within the same cell.

In another implementation, the indication signaling may include signaling common to a plurality of terminals within the same terminal group. For example, the indication signaling may be group-common DCI.

The above description is merely illustrative, and any signaling used by the terminal to determine the first spatial element pattern activated by the network device should fall within the protection scope of the present disclosure.

In an implementation, the indication signaling can be used to indicate a first bitmap, each bit included in the first bitmap corresponds to a state of a port group, and each port group includes one or more ports.

For example, when each port group includes only one port, if the number of ports included in the network device is L, then the first bitmap occupies L bits.

For example, when each port group includes N ports, where N is a positive integer greater than 1, if the number of ports included in the network device is L, then the first bitmap occupies (L/N) bits, thereby effectively reducing the number of bits occupied by the indication signaling.

In embodiments of the present disclosure, the network device can send the first bitmap to the terminal through the third MAC CE or the DCI. After receiving the first bitmap, the terminal can determine, based on the first bitmap, the first spatial element pattern activated by the network device.

In another implementation, the terminal can first determine a plurality of spatial element patterns, and then determine, based on the indication signaling sent by the network device, the first spatial element pattern from the plurality of spatial element patterns.

In an example, the terminal may determine the plurality of spatial element patterns based on first configuration signaling sent by the network device. For example, the first configuration signaling may include, but is not limited to, first Radio Resource Control (RRC) signaling, and/or a first MAC CE.

In another example, the terminal can determine the plurality of spatial element patterns based on a protocol predefined manner.

For example, the protocol can directly specify the plurality of spatial element patterns.

In another example, the terminal can determine the plurality of spatial element patterns based on both the protocol predefined manner and the first configuration signaling.

For example, the protocol specifies optional spatial element patterns. The base station selects part of these spatial element patterns through the first configuration signaling. For example, the optional spatial element patterns specified in the protocol include at least one of: spatial element pattern #1, where all ports are active; spatial element pattern #2, where ports with odd-numbered port numbers are active; spatial element pattern #3, where ports with even-numbered port numbers are active; spatial element pattern #4, where ports with port numbers 1 to 16 are active; or spatial element pattern #5, where ports with port numbers 17 to 32 are active. The network device selects spatial element pattern #1, spatial element pattern #4, and spatial element pattern #5 through the first configuration signaling.

The above description is merely illustrative, and any scheme for the terminal to determine the plurality of spatial element patterns should fall within the protection scope of the present disclosure.

In embodiments of the present disclosure, the plurality of spatial element patterns determined by the terminal are in a one-to-one correspondence with index values included in an index value set.

For example, the plurality of spatial element patterns determined by the terminal include: spatial element pattern #1, spatial element pattern #4 and spatial element pattern #5, and the index value set is {1, 2, 3}, where index value 1 corresponds to spatial element pattern #1, index value 2 corresponds to spatial element pattern #4 and index value 3 corresponds to spatial element pattern #5.

Accordingly, the indication signaling can be used to indicate a first index value, which is an index value in the above index value set.

After receiving the indication signaling, the terminal determines a spatial element pattern corresponding to the first index value from the determined plurality of spatial element patterns as the first spatial element pattern.

For example, the plurality of spatial element patterns determined by the terminal include: spatial element pattern #1, spatial element pattern #4 and spatial element pattern #5, and the index value set is {1, 2, 3}. If the first index value sent by the terminal through the third MAC CE or DCI is 2, then the terminal determines that the first spatial element pattern activated by the network device is spatial element pattern #4.

In an example, the first spatial element pattern may also correspond to the first bitmap, each bit included in the first bitmap corresponds to a state of a port group, and each port group includes one or more ports.

In another implementation, the terminal can first determine a set of numbers of ports, and then determine, based on the indication signaling sent by the network device, a first number from the set of numbers of ports, and determine the first spatial element pattern based on the first number.

The numbers of ports included in the set of numbers of ports correspond to different spatial element patterns.

In an example, the terminal can determine the set of numbers of ports based on second configuration signaling sent by the network device. For example, the second configuration signaling may include, but is not limited to, second RRC signaling and/or a second MAC CE.

In another example, the terminal can determine the set of numbers of ports based on a protocol predefined manner.

For example, the protocol can directly specify the set of numbers of ports. For example, the protocol specifies that the number of ports in the set of numbers of ports is less than or equal to the maximum number of ports used by the network device when transmitting the downlink signal. For example, if the maximum number of ports is 32, then the set of numbers of ports is {1, 2,..., 32}.

In another example, the terminal may determine the set of numbers of ports based on both the protocol predefined manner and the second configuration signaling.

For example, the number of ports in the set of numbers of ports is less than or equal to the maximum number of ports used by the network device when transmitting the downlink signal. On this basis, the network device configures the set of numbers of ports as {8, 16, 32} through the second configuration signaling.

After the terminal determines the set of numbers of ports using the above method, the network device can send the indication signaling to indicate the first number, which is a number in the set of numbers of ports. Assuming that the set of numbers of ports is {8, 16, 32}, the first number indicated by the indication signaling is 16.

Accordingly, the terminal determines, based on the first number, that the number of ports that are active in the first spatial element pattern activated by the network device is 16.

In the step 202, a first port that is active in the first spatial element pattern is determined.

In an implementation, the indication signaling is used to indicate the first bitmap, and the terminal can determine a port group with a bit value of the first value in the first bitmap as a first port group, and then determine all ports included in the first port group as first ports.

The first value can be "1" or "0", which is not limited by the present disclosure.

For example, the first value is "1", the first bitmap indicated by the indication signaling is {11001100}, and each port group includes one port. The network device has a total of 8 ports, with port numbers from 3000 to 3007, and the terminal determines ports with port numbers 3000, 3001, 3004, and 3005 as the first ports.

For another example, the first bitmap indicated by the indication signaling is {1010}, and each port group includes 2 ports. The network device has a total of 8 ports with port numbers from 3000 to 3007, and the terminal determines ports with port numbers 3000, 3001, 3004, and 3005 as the first ports.

In another implementation, the indication signaling is used to indicate the first index value, and the first spatial element pattern also corresponds to the first bitmap. Each bit in the first bitmap corresponds to a state of a port group, and each port group includes one or more ports.

After determining the first spatial element pattern from the plurality of spatial element patterns based on the first index value, the terminal can determine, based on the first bitmap, a port group with a bit value of the first value as the first port group, and determine a port included in the first port group as the first port. The specific implementation process has been described in the foregoing embodiments, which will not be repeated here.

In another implementation, the indication signaling is used to indicate the first number, and the terminal can determine the first number of ports in descending or ascending order of port numbers, and then determine the first number of ports as the first ports that are active.

For example, the network device has a total of 32 ports, with port numbers from 3000 to 3031, and the first number indicated by the indication signaling is 16, then the terminal can determine ports with port numbers 3000, 3001, 3002,... 3015 as the first ports.

For example, the network device has a total of 32 ports, with port numbers from 3000 to 3031, and the first number indicated by the indication signaling is 16, then the terminal can determine ports with port numbers 3031, 3030, 3029,... 3016 as the first ports.

In the step 203, based on a mapping relationship between different ports and different Resource Elements (REs), a first RE corresponding to each first port is determined.

In embodiments of the present disclosure, each first port may correspond to at least one first RE.

Taking the downlink signal being a Channel State Information-Reference Signal (CSI-RS) as an example, at present, the terminal can determine the number of ports for a CSI-RS resource based on RRC signaling, and further determine a receiving resource for the CSI-RS. In the Rel-18 scenario, if the number of ports for the CSI-RS resource changes dynamically, it will cause the terminal to be unable to determine, based on the existing mechanism, the receiving resource for the CSI-RS. Considering different ports of the same CSI-RS resource and the corresponding resource elements (e.g., REs) under specific configuration conditions in the existing mechanism, the present disclosure is mainly based on the following background, that is, mapping relationships between different ports of the same CSI-RS and REs and CSI-RS sequences remain unchanged. Based on the above assumption, if the terminal determines the port that actually transmits the CSI-RS sequence, then it can determine, based on the mapping relationship, the RE that actually receives the CSI-RS sequence.

For example, the terminal can use the following formula 1 to determine the mapping relationship between the ports and the Resource Elements (REs):

$$a_{k,l}^{(p,\mu)} = \beta_{CSIRS} w_f(k') \times w_t(l') \times r_{l,n_{s,f}}(m') \qquad \text{Formula 1}$$

wherein, $a$ is a CSI-RS signal in a resource grid, $k$ is a location index occupied by the RE in the frequency domain, $l$ is an Orthogonal Frequency Division Multiplexing (OFDM) symbol index occupied by the RE in the time domain, $p$ is the port index, $\beta_{CSIRS}$ is a power control offset in a Non-Zero Channel State Information-Reference Signal (NZP CSI-RS), $w_f(k') \times w_t(l')$ is an orthogonal sequence in the time and frequency domain, corresponding to a different Code Division Multiplexing (CDM) type, and $r_{l,n_{s,f}}(m')$ is a reference signal basis sequence according to the definition, where

$$r(m) = \frac{1}{\sqrt{2}}\big(1-2\cdot c(2m)\big) + j\frac{1}{\sqrt{2}}\big(1-2\cdot c(2m+1)\big).$$

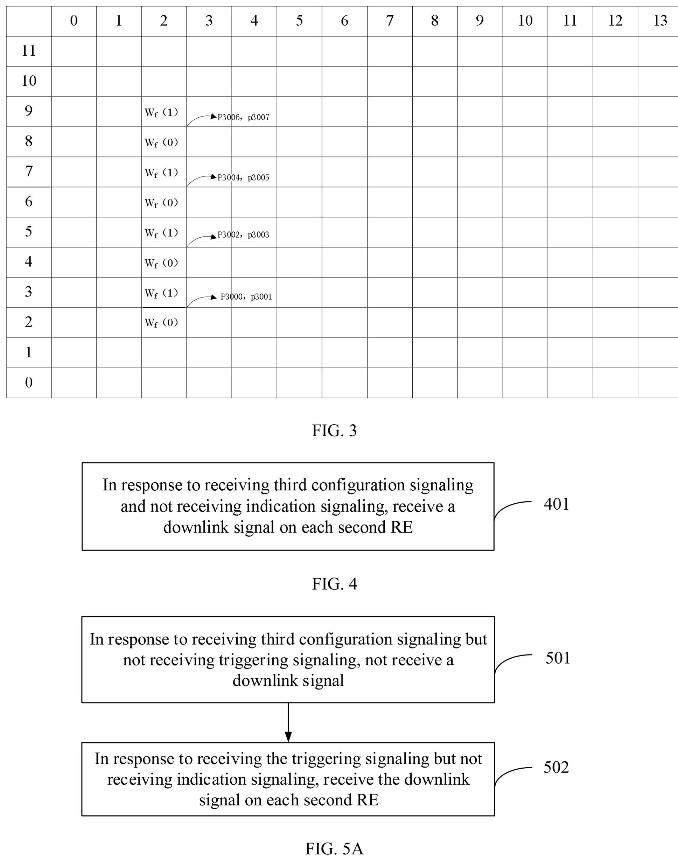

For example, when the density is 1, the number of ports of the network device is 8, the CDM type is frequency division-Code Division Multiplexing2 (fd-CDM2), the frequency domain allocation is 011110, and the first OFDM symbol index in time domain is 3, the mapping relationship between each port and the RE determined according to Formula 1 is shown in FIG. 3.

In embodiments of the present disclosure, the terminal can first determine the number of ports for the CSI-RS resource based on the RRC signaling, and then determine the mapping relationship between each port and the RE shown in FIG. 3. Further, the terminal determines the first port in the active state based on the first spatial element pattern, and determines the first RE corresponding to each first port according to the previously determined mapping relationship between each port and the RE (the background of the present disclosure is that the mapping relationships between different ports of the same CSI-RS and REs and the CSI-RS sequences remain unchanged).

Assuming that the first port in the active state includes ports with port numbers 3000, 3001, 3004 and 3005, the corresponding first REs are also as shown in FIG. 3.

The above description is merely illustrative. When the downlink signal is another signal, any scheme for the terminal to determine the first RE corresponding to each first port should fall within the protection scope of the present disclosure.

In the step 204, a downlink signal sent by the network device through a corresponding first port is received on each first RE.

In embodiments of the present disclosure, the terminal can receive, on each first RE, the downlink signal sent by the network device through the corresponding first port, and the downlink signal includes, but is not limited to, the CSI-RS.

In the above embodiments, the terminal can determine in real time, based on the indication signaling sent by the network device, the first spatial element pattern activated by the network device, thereby determining the receiving resource for the downlink signal and improving the feasibility of the NES mode.

In some embodiments, referring to FIG. 4, which shows a flowchart of a method for receiving a signal according to an embodiment, the method can be executed by a terminal. In embodiments of the present disclosure, the downlink signal sent by the network device is a periodically transmitted downlink signal, and the method may include step 401.

In the step 401, in response to receiving third configuration signaling and not receiving indication signaling, a downlink signal is received on each second RE.

In embodiments of the present disclosure, the third configuration signaling is used to configure the number of ports for the network device to transmit the downlink signal.

The third configuration signaling can be third RRC signaling.

The terminal can determine, through the third configuration signaling, such as the number of ports configured by the third RRC signaling, a second port that is currently active. The number of second ports is equal to the number of ports configured by the third configuration signaling. Then, each second RE is determined based on the above formula 1, and the mapping relationship between ports and REs is shown in FIG. 3.

For example, the terminal can determine, through the third RRC signaling, such as a nrofport parameter included in the third RRC signaling, the number of ports configured by the network device to transmit the downlink signal.

Furthermore, the terminal receives the periodically transmitted downlink signal on each second RE.

Furthermore, when the terminal receives the indication signaling sent by the network device, it determines that the spatial pattern of the network device has changed, and can then execute the above steps 201 to 204. The terminal determines, based on the first spatial element pattern currently activated by the network device, the first RE for receiving the downlink signal, and receives, on each first RE, the periodically transmitted downlink signals sent by the network device through the corresponding first port.

In the above embodiments, the terminal can determine in real time, based on the indication signaling sent by the network device, the first spatial element pattern activated by the network device, thereby determining the corresponding receiving resource for the periodically transmitted downlink signal, which improves the feasibility of the NES mode, with high availability.

In some embodiments, referring to FIG. 5A, which shows a flowchart of a method for receiving a signal according to an embodiment, the method can be executed by a terminal. In embodiments of the present disclosure, the downlink signal sent by the network device is a semi-persistent scheduling downlink signal or an aperiodically transmitted signal. For the semi-persistent scheduling downlink signal, the network device needs to trigger (or activate) the terminal side to receive the signal, and after the network device triggers (or activates) the terminal to receive the semi-persistent scheduling downlink signal, the semi-persistent scheduling downlink signal is transmitted periodically, i.e., the semi-persistent scheduling downlink signal is switched to a periodically transmitted downlink signal. For the aperiodically transmitted signal, the network device also needs to trigger (or activate) the terminal side to receive the signal, but the network device will not send the downlink signal again. The method may include steps 501 and 502.

In the step 501, in response to receiving third configuration signaling but not receiving triggering signaling (or activation signaling), the downlink signal is not received.

In the existing scheme, the terminal side needs to receive the semi-persistent scheduling downlink signal or the aperiodically transmitted downlink signal based on the triggering signaling (or activation signaling) sent by the network device. Therefore, in the present disclosure, even if the terminal receives the third configuration signaling and determines that the network device has activated the first spatial element pattern, the terminal will not trigger (or activate) the reception of the downlink signal, since the terminal has not received the triggering signaling (or activation signaling) sent by the network device.

In embodiments of the present disclosure, the third configuration signaling is used to configure the number of ports for the network device to transmit the downlink signal.

The third configuration signaling can be third RRC signaling.

For example, the terminal can determine, through the third RRC signaling, such as a nrofport parameter included in the third RRC signaling, the number of ports configured by the network device to transmit the downlink signal.

In embodiments of the present disclosure, the triggering signaling is signaling used to trigger the terminal to receive the semi-persistent scheduling downlink signal or the aperiodically transmitted downlink signal.

The activation signaling is signaling used to activate the terminal to receive the semi-persistent scheduling downlink signal or the aperiodically transmitted downlink signal.

For example, the triggering signaling (or activation signaling) can be MAC CE or DCI.

In the step 502, in response to receiving the triggering signaling (or activation signaling) but not receiving the indication signaling, the downlink signal is received on each second RE.

The indication signaling is used to determine the first spatial element pattern activated by the network device.

It should be noted that in this case, the triggering signaling (or activation signaling) and the indication signaling are different signaling.

For example, the triggering signaling (or activation signaling) can be a DCI, and the indication signaling can be another DCI.

For example, the triggering signaling (or activation signaling) can be a MAC CE, and the indication signaling can be another MAC CE.

For example, the triggering signaling (or activation signaling) can be the DCI, and the indication signaling can be the MAC CE, or the triggering signaling (or activation signaling) can be the MAC CE, and the indication signaling can be the DCI.

In this case, the terminal receives the triggering signaling but does not receive the indication signaling. The terminal determines that the network device has triggered (or activated) the terminal to receive the downlink signal, and the network device determines, based on the third configuration signaling, such as the number of ports configured by the third RRC signaling, a second port that is active. The number of second ports is equal to the number of ports configured by the network device through the third configuration signaling. In this case, the terminal receives the downlink signal on each second RE. The method for determining the second RE is similar to the method for determining the second RE described in the above embodiments, which will not be repeated here.

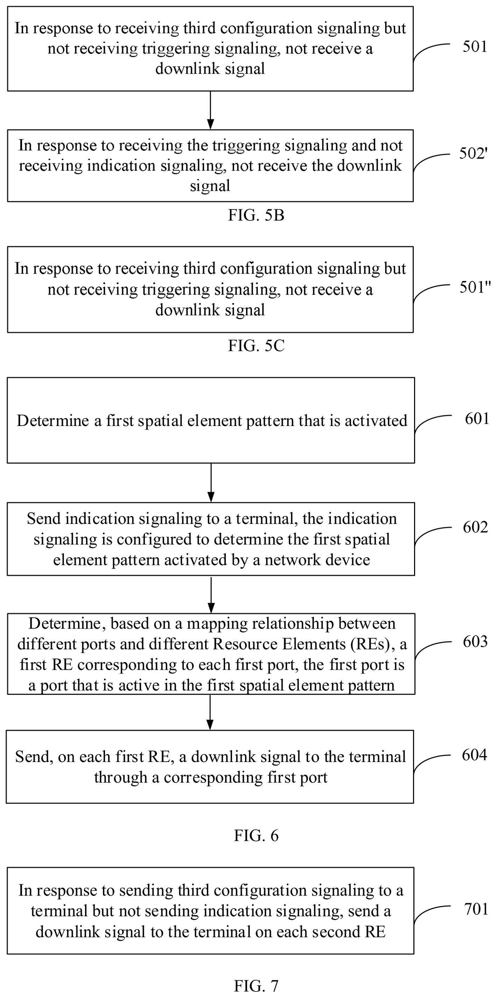

It should be noted that the step 502 can be replaced by the following step 502', as shown in FIG. 5B.

In the step 502', in response to receiving the triggering signaling (or activation signaling) and not receiving the indication signaling, the downlink signal is not received.

In other words, the terminal may also not receive the downlink signal in this case.

Further, after the step 502 or 502', the above steps 201 to 204 are performed.

In the above embodiments, the terminal can determine in real time, based on the indication signaling sent by the network device, the first spatial element pattern activated by the network device, thereby determining the corresponding receiving resource for the semi-persistent scheduling downlink signal or the aperiodically transmitted downlink signal, which improves the feasibility of the NES mode, with high availability.

In some embodiments, referring to FIG. 5C, which shows a method for receiving a signal according to an embodiment, the method can be executed by a terminal. In embodiments of the present disclosure, the downlink signal sent by the network device is a semi-persistent scheduling downlink signal or an aperiodically transmitted signal, and the above method may include step 501".

In the step 501", in response to receiving third configuration signaling but not receiving triggering signaling (or activation signaling), the downlink signal is not received.

The step 501" is implemented in a similar way to the step 501, which will not be described again here.

Further, the terminal executes the above steps 201 to 204. It should be noted that in the step 201, the terminal receives the indication signaling and the triggering signaling (or activation signaling), and the triggering signaling (or activation signaling) and the indication signaling are the same signaling in this case.

That is, in a case where the terminal receives the indication signaling used to determine the first spatial element pattern activated by the network device, the terminal determines that it has received the triggering signaling (or activation signaling). In embodiments of the present disclosure, the triggering signaling is signaling used to trigger the terminal to receive the semi-persistent scheduling downlink signal or the aperiodically transmitted downlink signal. The activation signaling is signaling used to activate the terminal to receive the semi-persistent scheduling downlink signal or the aperiodically transmitted downlink signal.

In the above embodiments, the terminal can determine in real time, based on the indication signaling sent by the network device, the spatial element pattern activated by the network device, thereby determining the corresponding receiving resource for the semi-persistent scheduling downlink signal or the aperiodically transmitted downlink signal, which improves the feasibility of the NES mode, with high availability.

In the following, the method for sending the signal provided in the present disclosure will be introduced from the network device side.

Embodiments of the present disclosure provide a method for sending a signal. Referring to FIG. 6, which shows a flowchart of a method for sending a signal according to an embodiment, the method can be executed by a network device, including but not limited to base stations, access network devices, etc. in 4G, 5G, or 6G. The method may include steps 601 to 604.

In the step 601, a first spatial element pattern that is activated is determined.

In embodiments of the present disclosure, the network device can dynamically determine, based on network energy consumption, transmission load, etc., the first spatial element pattern currently to be activated.

In an implementation, the network device enables the NES mode, which dynamically reduces the number of spatial elements for transmitting the downlink signal. In this case, the network device can determine in real time the first spatial element pattern that is currently activated.

In another implementation, the network device can first determine a plurality of spatial element patterns, and then determine a spatial element pattern to be activated from the plurality of spatial element patterns, which is the first spatial element pattern.

In an example, the network device may send first configuration signaling to the terminal to configure the plurality of spatial element patterns. For example, the first configuration signaling may include, but is not limited to, first RRC signaling and/or a first MAC CE.

In another example, the network device can determine the plurality of spatial element patterns based on a protocol predefined manner.

In another example, the network device can determine the plurality of spatial element patterns based on both the protocol predefined manner and the first configuration signaling.

The above description is merely illustrative, and any scheme for the network device to determine the plurality of spatial element patterns should fall within the protection scope of the present disclosure.

For the network device, after determining the plurality of spatial element patterns, it can select to activate one of the spatial element patterns based on its own network energy consumption, transmission load, etc.

In another implementation, the network device can first determine a set of numbers of ports, and the numbers of ports included in the set of numbers of ports correspond to different spatial element patterns. The network device can select a first number from the set of numbers of ports and activate the corresponding first spatial element pattern.

In an example, the network device may send second configuration signaling to the terminal to configure the set of numbers of ports. For example, the second configuration signaling may include, but is not limited to, second RRC signaling and/or a second MAC CE.

In another example, the network device can determine the set of numbers of ports based on a protocol predefined manner.

For example, the protocol can directly specify the set of numbers of ports. For example, the protocol specifies the set of numbers of ports as {8, 16, 32,...}.

In another example, the network device can determine the set of numbers of ports based on both the protocol predefined manner and the second configuration signaling.

In the step 602, indication signaling is sent to the terminal, and the indication signaling is used to determine the first spatial element pattern activated by the network device.

In an implementation, the indication signaling may include a third MAC CE.

In another implementation, the indication signaling may include DCI.

In an implementation, the indication signaling may include UE-specific signaling. For example, the indication signaling may include a UE-specific third MAC CE or UE-specific DCI.

In another implementation, the indication signaling may include signaling common to a plurality of terminals within the same cell, i.e., cell-specific signaling. For example, the indication signaling may include a third MAC CE common to the plurality of terminals within the same cell, or DCI common to the plurality of terminals within the same cell.

In another implementation, the indication signaling may include signaling common to a plurality of terminals within the same terminal group. For example, the indication signaling may be group-common DCI.

The above description is merely illustrative, and any signaling used by the terminal to determine the first spatial element pattern activated by the network device should fall within the protection scope of the present disclosure.

In an implementation, the indication signaling can be used to indicate a first bitmap, each bit included in the first bitmap corresponds to a state of a port group, and each port group includes one or more ports.

For example, when each port group includes only one port, if the number of ports included in the network device is L, then the first bitmap occupies L bits.

For example, when each port group includes N ports, where N is a positive integer greater than 1, if the number of ports included in the network device is L, then the first bitmap occupies (L/N) bits, thereby effectively reducing the number of bits occupied by the indication signaling.

In embodiments of the present disclosure, the network device can send the first bitmap to the terminal through the third MAC CE or the DCI, so that the terminal determines the first spatial element pattern activated by the network device.

The network device may set a bit value corresponding to a first port group to which the first port in the active state belongs as a first value in the first bitmap. The first value can be "1" or "0", which is not limited by the present disclosure.

For example, the first value can be "1". The network device has a total of 8 ports with port numbers from 3000 to 3007, and ports with port numbers 3000, 3001, 3004, and 3005 are the first ports that are active in the first spatial element pattern currently activated by the network device. Then the network device can send the first bitmap to the terminal, and the first bitmap is {11001100}.

For another example, the first value can be "1". The network device has a total of 8 ports with port numbers from 3000 to 3007, and ports with port numbers 3000, 3001, 3004, and 3005 are the first ports that are active in the first spatial element pattern currently activated by the network device. Ports with port numbers 3000 and 3001 form a set, and ports with port numbers 3004 and 3005 form another set. Then the network device can send the first bitmap to the terminal, and the first bitmap is {1010}.

In another implementation, the network device determines the first spatial element pattern from the plurality of spatial element patterns, and the network device can determine a first index value corresponding to the first spatial element pattern from an index value set, and index values included in the index value set are in a one-to-one correspondence with the plurality of spatial element patterns.

Accordingly, the indication signaling can be used to indicate the first index value.

In an example, the first spatial pattern also corresponds to the first bitmap, each bit included in the first bitmap corresponds to a state of a port group, and each port group includes one or more ports.

In the first bitmap, a bit value corresponding to the first port group to which the first port in the active state belongs is the first value. The first value can be "1" or "0", which is not limited by the present disclosure.

In another implementation, if the network device determines the first number from the set of numbers of ports, the indication signaling can be used to indicate the first number.

The network device determines the first number of ports in ascending or descending order of port numbers, and determines the first number of ports as the first port that is active in the first spatial element pattern.

In the step 603, based on a mapping relationship between different ports and different Resource Elements (REs), a first RE corresponding to each first port is determined, and the first port is a port that is active in the first spatial element pattern.

In embodiments of the present disclosure, each first port may correspond to at least one first RE.

Taking the downlink signal being a CSI-RS as an example, at present, the network device can configure the number of ports for a CSI-RS resource based on RRC signaling (here, the number of ports is the number of antenna ports), and further determine a sending resource for the CSI-RS. In the Rel-18 scenario, if the number of ports for the CSI-RS resource changes dynamically, it will cause the terminal to be unable to determine, based on the existing mechanism, the receiving resource for the CSI-RS. Considering different ports of the same CSI-RS resource and the corresponding resource elements (e.g., REs) under specific configuration conditions in the existing mechanism, the present disclosure is mainly based on the following background, that is, mapping relationships between different ports of the same CSI-RS and REs and CSI-RS sequences remain unchanged. Based on the above assumption, if the network device determines the port that actually transmits the CSI-RS sequence, then it can determine, based on the mapping relationship, the RE that actually sends the CSI-RS sequence.

For example, the network device can use Formula 1 to determine the mapping relationship between ports and REs. The specific implementation has already been described on the terminal side, which will not be repeated here.

In the step 604, a downlink signal is sent to the terminal on each first RE through the corresponding first port.

In embodiments of the present disclosure, the network device can send, on each first RE, the downlink signal to the terminal through the corresponding first port, and the downlink signal includes, but is not limited to, the CSI-RS.

In the above embodiments, the network device can use the indication signaling to allow the terminal to determine the first spatial element pattern currently activated by the network device. Furthermore, the network device can determine the resource for sending the downlink signal in the first spatial element pattern, which improves the feasibility of the NES mode, with high availability.

In some embodiments, referring to FIG, 7, which shows a flowchart of a method for sending a signal according to an embodiment, the method can be executed by a network device, including but not limited to base stations, access network devices, etc. in 4G, 5G, or 6G. In embodiments of the present disclosure, the downlink signal sent by the network device is a periodically transmitted downlink signal, and the method may include step 701.

In the step 701, in response to sending third configuration signaling to the terminal but not sending indication signaling, a downlink signal is sent to the terminal on each second RE.

In embodiments of the present disclosure, the third configuration signaling is used to configure the number of ports for the network device to transmit the downlink signal.

For example, the network device can configure, through the third RRC signaling, the number of ports for the network device to transmit the downlink signal. For example, the network device can configure the number of ports through a nrofport parameter included in the third RRC signaling.

The network device can determine, through the number of ports configured by the third configuration signaling, a second port that is active. The number of second ports is equal to the number of ports configured by the third configuration signaling, and then each second RE is determined based on the above formula 1.

Furthermore, the network device sends the periodically transmitted downlink signal to the terminal on each second RE.

Furthermore, the network device can perform the steps 601 to 604 above. The network device determines the currently activated first spatial element pattern, sends the indication signaling to the terminal, and sends, on each first RE, the periodically transmitted downlink signal to the terminal through the corresponding first port.

In the above embodiments, the network device can send the indication signaling to the terminal to inform the terminal in real time of the first spatial element pattern activated by the network device, which improves the feasibility of NES mode, with high availability.

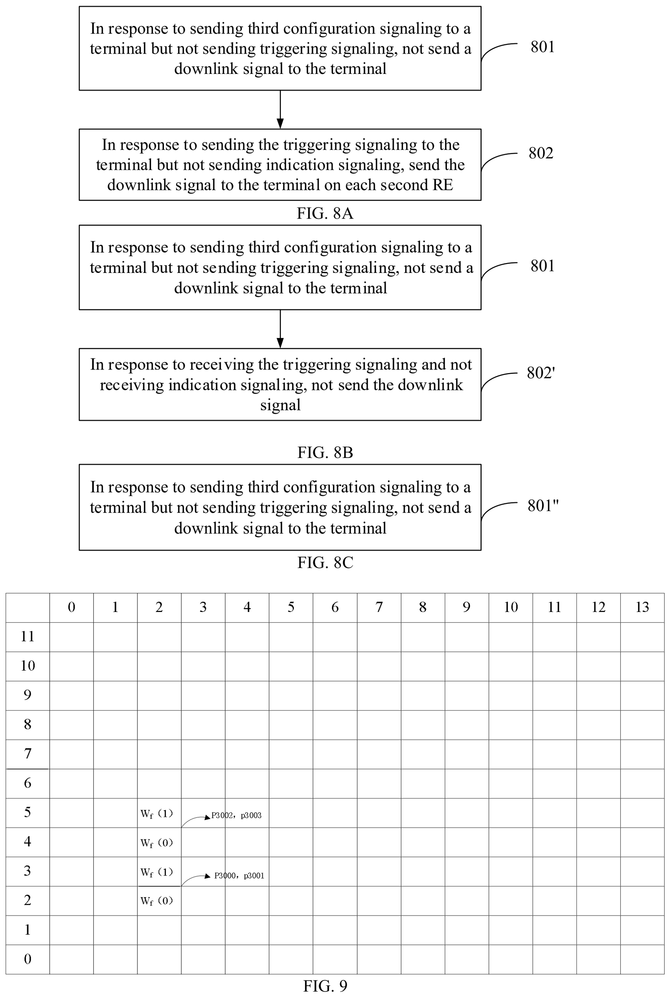

In some embodiments, referring to FIG. 8A, which shows a flowchart of a method for receiving a signal according to an embodiment, the method can be executed by a network device. In embodiments of the present disclosure, the downlink signal sent by the network device is a semi-persistent scheduling downlink signal or an aperiodically transmitted signal, and the above method may include steps 801 and 802.

In the step 801, in response to sending third configuration signaling to the terminal but not sending triggering signaling (or activation signaling), a downlink signal is not sent to the terminal.

In the existing scheme, the terminal side needs to receive the semi-persistent scheduling downlink signal or the aperiodically transmitted downlink signal based on the triggering signaling (or activation signaling) sent by the network device. Therefore, in the present disclosure, even if the network device sends the third configuration signaling to the terminal to inform the terminal of the number of ports for the network device to transmit the downlink signal, the network device will not send the downlink signal to the terminal if the network device does not send the triggering signaling (or activation signaling).

In embodiments of the present disclosure, the third configuration signaling is used to configure the number of ports for the network device to transmit the downlink signal.

The third configuration signaling can be third RRC signaling.

For example, the network device can configure the number of ports through the third RRC signaling, such as a nrofport parameter included in the third RRC signaling.

In embodiments of the present disclosure, the triggering signaling is signaling used to trigger the terminal to receive the semi-persistent scheduling downlink signal or the aperiodically transmitted downlink signal.

The activation signaling is signaling used to activate the terminal to receive the semi-persistent scheduling downlink signal or the aperiodically transmitted downlink signal.

For example, the triggering signaling (or activation signaling) can be MAC CE or DCI.

In the step 802, in response to sending the triggering signaling (or activation signaling) to the terminal but not sending the indication signaling, the downlink signal is sent to the terminal on each second RE.

It should be noted that in this case, the triggering signaling (or activation signaling) and the indication signaling are different signaling.

For example, the triggering signaling (or activation signaling) can be a DCI, and the indication signaling can be another DCI.

For example, the triggering signaling (or activation signaling) can be a MAC CE, and the indication signaling can be another MAC CE.

For example, the triggering signaling (or activation signaling) can be the DCI, and the indication signaling can be the MAC CE, or the triggering signaling (or activation signaling) can be the MAC CE, and the indication signaling can be the DCI.

In this case, after the network device sends the triggering signaling (or activation signaling) to trigger (or activate) the terminal to receive the downlink signal, since the network device does not send the indication signaling, the network device can send the downlink signal to the terminal. Specifically, the network device can send the downlink signal on each second RE. The method for the network device to determine the second RE is similar to the method for determining the second RE in the above embodiments, which will not be repeated here.

It should be noted that step 802 can be replaced by the following step 802', as shown in FIG. 8B.

In the step 802', in response to receiving the triggering signaling (or activation signaling) and not receiving the indication signaling, the downlink signal is not sent.

That is, the network device does not send the downlink signal in this case.

Furthermore, after the step 802 or 802', the network device may execute steps 601 to 604 above.

In the above embodiments, the network device can send the indication signaling to the terminal to inform the terminal in real time of the first spatial element pattern activated by the network device, ensuring the transmission of the semi-persistent scheduling downlink signal or the aperiodically transmitted downlink signal, which improves the feasibility of the NES mode, with high availability.

In some embodiments, referring to FIG. 8C, which shows a flowchart of a method for receiving a signal according to an embodiment, the method can be executed by a network device. In embodiments of the present disclosure, the downlink signal sent by the network device is a semi-persistent scheduling downlink signal or an aperiodically transmitted signal, and the above method may include step 801".

In the step 801", in response to sending third configuration signaling to the terminal but not sending triggering signaling (or activation signaling), a downlink signal is not sent to the terminal.

The step 801" is implemented in a similar way to the step 801, which will not be described again here.

After the step 801", the network device can continue to execute steps 601 to 604 above. It should be noted that in the step 801, the network device sends the indication signaling, and in this case, the triggering signaling (or activation signaling) and the indication signaling are the same signaling. That is, the network device uses the same signaling to inform the terminal of the first spatial element pattern activated by the network device, and also triggers (or activates), through this signaling, the terminal to receive the downlink signal.

In the above embodiments, the network device can send the indication signaling to the terminal to inform the terminal in real time of the first spatial element pattern activated by the network device, ensuring the transmission of the semi-persistent scheduling downlink signal or the aperiodically transmitted downlink signal, which improves the feasibility of the NES mode, with high availability.

The above scheme is further illustrated with examples below.

Assuming the terminal is a Rel-18 or later release terminal that supports NES features, the network device dynamically reduces the number of transmission antennas based on different communication load scenarios to reduce the corresponding energy consumption, which may lead to flexible changes in the number of ports for the same CSI-RS resource. Alternatively, if the network device wants to disable the NES mode after it has been enabled, it will dynamically increase the number of transmission antennas, which may also lead to flexible changes in the number of ports for the same CSI-RS resource.

Taking the downlink signal including the CSI-RS as an example, the terminal can determine, based on the third configuration signaling sent by the network device, such as the third RRC signaling, the number of ports for the network device to transmit the downlink signal, and further determine the receiving resource for the CSI-RS. In the Rel-18 scenario, if the number of ports for the CSI-RS resource changes dynamically, the terminal will be unable to determine the receiving resource for the CSI-RS based on the existing mechanism. Considering that different ports of the same CSI-RS resource correspond to different resource elements (e.g., REs), the solution of the present disclosure is mainly based on the following background:

that is, mapping relationships between different ports of the same CSI-RS and REs and CSI-RS sequences remain unchanged.

Based on the above assumption, if the terminal determines the port that actually transmits the CSI-RS sequence, then it can determine, based on the mapping relationship, the RE that actually receives the CSI-RS sequence. For example, in a scenario shown in FIG. 1, in the scenario, the terminal determines that at the current time, ports for the network device to actually transmit the CSI-RS sequence are from p3000 to p3003, and then the terminal determines the corresponding RE that actually receives the CSI-RS sequence, as shown in FIG. 9.

Based on the above background, the scheme of the present disclosure mainly designs a signaling indication method to indicate the first spatial element pattern currently activated by the network device, which facilitates the terminal to determine the receiving resource for the CSI-RS and achieves consistent understanding between the terminal and the network device.

In embodiment 1, the terminal receives the third RRC signaling to determine the configuration of the CSI-RS resource, that is, determine each second RE for the terminal to receive the CSI-RS when the network device transmits the CSI-RS. Specifically, the second RE can be determined based on the above formula 1.

In a scenario where the first spatial element pattern activated by the network device changes, the network device sends the indication signaling to the terminal, and the indication signaling is used by the terminal to determine the first spatial element pattern activated by the network device. The indication signaling includes, but is not limited to, at least one of:

a third MAC CE or DCI.

In an example, the indication signaling can be UE-specific signaling, signaling (cell-specific signaling) common to a plurality of terminals within the same cell, or signaling (e.g., group-common DCI) common to a plurality of terminals within the same terminal group.

In an implementation, the indication signaling is in the form of bitmap, that is, the indication signaling is used to indicate the first bitmap, and port numbers in ascending or descending order are in a one-to-one correspondence with bits included in the first bitmap.

If a bit value corresponding to a port number is 1, then that port is the first port in the active state. That is, the network device will transmit the CSI-RS through that first port. If a bit value corresponding to a port number is 0, then that port is in a muted state.

For example, if the network device supports 8 ports when transmitting the CSI-RS, and the number of ports actually used for transmission is reduced to 4, one of indication modes for the indication signaling sent by the network device is 11001100, indicating that the corresponding ports p3000, p3001, p3004, and p3005 are ports that actually transmit the CSI-RS.

In an implementation, in order to reduce the bit overhead of the indication signaling, the indication signaling may have a granularity of N ports, where N can be determined in a predefined manner, for example, N = 2, 3,..., or N can be determined by signaling indication, which is not limited by the present disclosure.

For example, when the network device supports 8 ports for transmitting the CSI-RS, if the number of ports actually used for transmission is reduced to 4, and N is 2, one of indication modes for the indication signaling sent by the network device is 1010, indicating that the corresponding ports p3000, p3001, p3004, and p3005 are ports that actually transmit the CSI-RS. For example, the Most Significant Bit (MSB) of 1 in 1010 corresponds that ports p3000 and p3001 are activated.

In another implementation, the terminal can determine the set of numbers of ports based on the second configuration signaling or the protocol predefined manner. The network device indicates a first number through the indication signaling, and the first number is a number in the set of numbers of ports. The terminal determines the first number of ports in descending or ascending order of port numbers, and determines the first number of ports as the first ports in the active state. For example, the terminal selects the first L ports based on the ascending order of port numbers to receive the CSI-RS resource, for example, the selected port numbers are p = 3000, 3001, 3002...3000 + L-1, where L is the first number.

In this embodiment, the third configuration signaling, such as the third RRC signaling, is mainly used to configure the relevant information of the CSI-RS resource, and then the DCI or the third MAC CE is used as the indication signaling to dynamically indicate the first spatial element pattern activated by the network device. After the terminal receives the third configuration signaling and before the terminal receives the indication signaling (the DCI or the third MAC CE), the terminal's behavior can be determined based on the following scheme.

In an example, under the condition that the CSI-RS is a periodically transmitted CSI-RS, after receiving the third configuration signaling (e.g., the third RRC signaling), the terminal determines, based on the third configuration signaling, the reception of the corresponding CSI-RS resource, that is, after determining each second RE, it receives the measurement CSI-RS on the second RE. And after receiving the indication signaling, such as the DCI and /or the third MAC CE, the terminal determines the first RE based on the updated first spatial element pattern, and receives, on the first RE, the CSI-RS corresponding to measurement.

In an example, under the condition that the CSI-RS is a semi-persistent scheduling CSI-RS or an aperiodically transmitted CSI-RS, after receiving the third configuration signaling (e.g., the third RRC signaling), the terminal does not receive the CSI-RS before receiving the triggering signaling (or activation signaling).

After receiving the triggering signaling (or activation signaling), the terminal receives the measurement CSI-RS on each second RE.

For the aforementioned problems, in implementation 1.1, the triggering signaling (or activation signaling) and the indication signaling are the same signaling, for example, the same DCI or the same MAC CE. After receiving the triggering signaling (or activation signaling), the terminal performs, based on the configuration of the triggering signaling (or activation signaling) and the first spatial element pattern indicated by the indication signaling, the corresponding CSI-RS reception measurement on each first RE.

In implementation 1.2, the triggering signaling (or activation signaling) and the indication signaling are different signaling, such as different DCIs or different MAC CEs, or one is the DCI and the other is the MAC CE.

In implementation 1.2.1, after receiving the triggering signaling (or activation signaling), the terminal performs the corresponding CSI-RS reception measurement based on the configuration of the third configuration signaling, that is, receives the measurement CSI-RS on each second RE. And after receiving the indication signaling, the terminal performs the reception of the CSI-RS based on the currently updated first spatial element pattern of the network device, that is, receives the measurement CSI-RS on each first RE.

In implementation 1.2.2, after receiving the triggering signaling (or activation signaling), the terminal does not perform the corresponding CSI-RS reception measurement. Instead, after receiving the indication signaling, the terminal performs the reception of the CSI-RS based on the currently updated first spatial element pattern of the network device, that is, receives the measurement CSI-RS on each first RE.

In embodiment 2, the terminal receives second configuration signaling, such as second RRC signaling or a second MAC CE, to determine a plurality of spatial element patterns, or determines the plurality of spatial element patterns through a predefined manner. Further, the network device can indicate a first index value through the indication signaling, such as a third MAC CE or DCI. The first index value is an index value in an index value set, and index values included in the index value set are in a one-to-one correspondence with the plurality of spatial element patterns.

In an example, the indication signaling can be UE-specific signaling, signaling (cell-specific signaling) common to a plurality of terminals within the same cell, or signaling (e.g., group-common DCI) common to a plurality of terminals within the same terminal group.

The network device can configure the plurality of spatial element patterns through the second configuration signaling, for example, configures a list of spatial element patterns, and indicates, through the third MAC CE or DCI, the first index value corresponding to one of the spatial element patterns. The terminal determines a spatial element pattern corresponding to the first index value in the above list as the first spatial element pattern. The configuration manner for the spatial element patterns in the list can also be a bitmap-based manner, with specific implementations similar to embodiment 1, which will not be repeated here. For example, if the network device supports 8 ports when transmitting the CSI-RS, the list of spatial element patterns includes {11111111, 11110000, 11001100}.

In an implementation, in order to reduce the bit overhead of the second configuration signaling, the indication may have a granularity of N antennas, where N can be determined in a predefined manner, for example, N = 2, 3,..., or N can be determined by signaling indication. For example, if the network device supports 8 ports when transmitting the CSI-RS, and N is 2, the list of spatial element patterns includes {1111, 1100, 1010}.

In this embodiment, the second configuration signaling is mainly used to configure the list of spatial element patterns, or the list of spatial element patterns is determined in the predefined manner. The network device sends the indication signaling, for example, sends the DCI or the third MAC CE, to dynamically indicate the first index value corresponding to one of the spatial element patterns included in the list.

After the terminal receives the third configuration signaling (which is used to configure information related to the CSI-RS resource) and before the terminal receives the indication signaling (the DCI or the third MAC CE), the terminal's behavior can be determined based on the following scheme.

In an example, under the condition that the CSI-RS is a periodically transmitted CSI-RS, after receiving the third configuration signaling (e.g., the third RRC signaling), the terminal determines, based on the third configuration signaling, the reception of the corresponding CSI-RS resource, that is, after determining each second RE, it receives the measurement CSI-RS on the second RE. And after receiving the indication signaling, such as the DCI and /or the third MAC CE, the terminal determines the first RE based on the updated first spatial element pattern, and receives, on the first RE, the CSI-RS corresponding to measurement.

In an example, under the condition that the CSI-RS is a semi-persistent scheduling CSI-RS or an aperiodically transmitted CSI-RS, after receiving the third configuration signaling (e.g., the third RRC signaling), the terminal does not receive the CSI-RS before receiving the triggering signaling (or activation signaling).

After receiving the triggering signaling (or activation signaling), the terminal receives the measurement CSI-RS on each second RE.

For the aforementioned problems, in implementation 2.1, the triggering signaling (or activation signaling) and the indication signaling are the same signaling, for example, the same DCI or the same MAC CE. After receiving the triggering signaling (or activation signaling), the terminal performs, based on the configuration of the triggering signaling (or activation signaling) and the first spatial element pattern indicated by the indication signaling, the corresponding CSI-RS reception measurement on each first RE.

In implementation 2.2, the triggering signaling (or activation signaling) and the indication signaling are different signaling, such as different DCIs or different MAC CEs, or one is the DCI and the other is the MAC CE.

In implementation 2.2.1, after receiving the triggering signaling (or activation signaling), the terminal performs the corresponding CSI-RS reception measurement based on the configuration of the third configuration signaling, that is, receives the measurement CSI-RS on each second RE. And after receiving the indication signaling, the terminal performs the reception of the CSI-RS based on the currently updated first spatial element pattern of the network device, that is, receives the measurement CSI-RS on each first RE.

In implementation 2.2.2, after receiving the triggering signaling (or activation signaling), the terminal does not perform the corresponding CSI-RS reception measurement. Instead, after receiving the indication signaling, the terminal performs the reception of the CSI-RS based on the currently updated first spatial element pattern of the network device, that is, receives the measurement CSI-RS on each first RE.

In the above embodiments, the dynamical adjustment of the number of ports in the active state by the network device is supported, making downlink signal transmission more flexible, with high availability.

Corresponding to the aforementioned method embodiments of the application function implementation, the present disclosure further provides apparatus embodiments of the application function implementation.

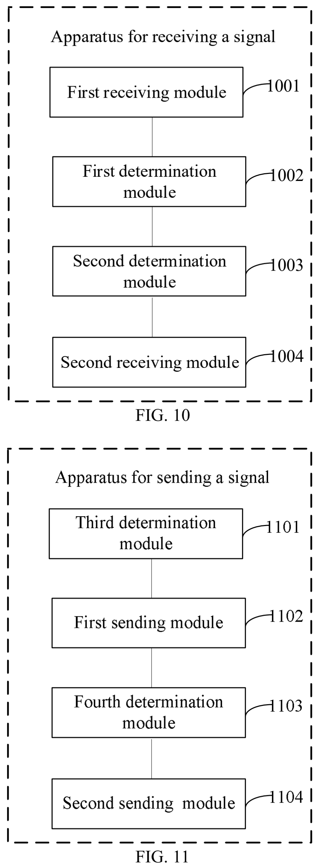

Referring to FIG. 10, which shows a block diagram of an apparatus for receiving a signal according to an example embodiment, the apparatus is applied to a terminal and includes:

a first receiving module 1001, configured to receive indication signaling sent by a network device, wherein the indication signaling is configured to determine a first spatial element pattern activated by the network device;
a first determination module 1002, configured to determine a first port that is active in the first spatial element pattern;
a second determination module 1003, configured to determine, based on a mapping relationship between different ports and different Resource Elements (REs), a first RE corresponding to each first port; and
a second receiving module 1004, configured to receive, on each first RE, a downlink signal sent by the network device through a corresponding first port.

Referring to FIG. 11, which shows a block diagram of an apparatus for sending a signal according to an example embodiment, the apparatus is applied to a network device and includes:

a third determination module 1101, configured to determine a first spatial element pattern that is activated;
a first sending module 1102, configured to send indication signaling to a terminal, wherein the indication signaling is configured to determine the first spatial element pattern activated by a network device;
a fourth determination module 1103, configured to determine, based on a mapping relationship between different ports and different Resource Elements (REs), a first RE corresponding to each first port, wherein the first port is a port that is active in the first spatial element pattern; and
a second sending module 1104, configured to send, on each first RE, a downlink signal to the terminal through a corresponding first port.

For the apparatus embodiments, since they basically correspond to the method embodiments, the relevant parts can be referred to the description of the method embodiments. The apparatus embodiments described above are only illustrative. The units described as separated parts may or may not be physically separated, and the parts shown as units may or may not be physical units, that is, the units may be located in one place, or may be distributed over a plurality of network units. Some or all of the modules may be selected according to actual needs to achieve the objectives of the solutions of the present disclosure. Those of ordinary skill in the art can understand and implement the present disclosure without paying creative labor.

Correspondingly, the present disclosure further provides a computer-readable storage medium having a computer program stored thereon, and the computer program is configured to execute any method for receiving the signal on the terminal side as described above.

Correspondingly, the present disclosure further provides a computer-readable storage medium having a computer program stored thereon, and the computer program is configured to execute any method for sending the signal on the network device side as described above.

Correspondingly, the present disclosure further provides an apparatus for receiving a signal, including:

a processor; and
a memory configured to store processor-executable instructions;
the processor is configured to execute any method for receiving the signal on the terminal side as described above.

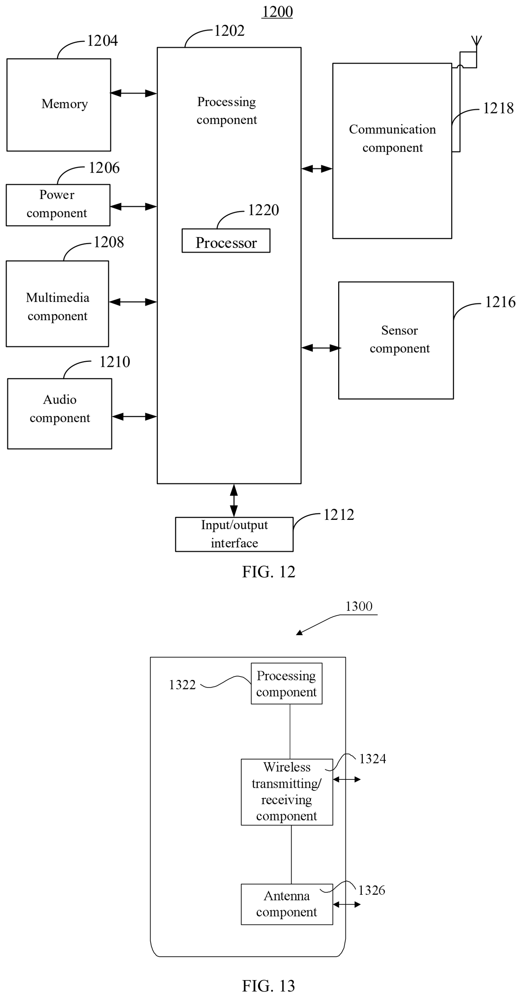

FIG. 12 shows a block diagram of an apparatus 1200 for receiving a signal according to an example embodiment. For example, the apparatus 1200 may be a mobile phone, a tablet computer, an e-book reader, a multimedia playback device, a wearable device, an in-vehicle user equipment, an iPad, a smart TV, or other terminals.

Referring to FIG. 12, the apparatus 1200 may include one or more of the following components: a processing component 1202, a memory 1204, a power component 1206, a multimedia component 1208, an audio component 1210, an input/output (I/O) interface 1212, a sensor component 1216 and a communication component 1218.

The processing component 1202 typically controls overall operations of the apparatus 1200, such as the operations associated with display, telephone calls, data random access, camera operations, and recording operations. The processing component 1202 may include one or more processors 1220 to execute instructions to perform all or part of the steps in the method for receiving the signal described above. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202. For example, the processing component 1202 can read executable instructions from the memory to implement the steps of the method for receiving the signal provided in the above various embodiments.

The memory 1204 is configured to store various types of data to support the operation of the apparatus 1200. Examples of such data include instructions for any application or method operated on the apparatus 1200, contact data, phonebook data, messages, pictures, video, etc. The memory 1204 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power component 1206 provides power to various components of the apparatus 1200. The power component 1206 may include a power management system, one or more power sources, and any other components associated with the generation, management, and distribution of power in the apparatus 1200.

The multimedia component 1208 includes a display screen providing an output interface between the apparatus 1200 and the user. In some embodiments, the multimedia component 1208 includes a front camera and/or a rear camera. The front camera and/or the rear camera may receive an external multimedia datum while the apparatus 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the apparatus 1200 is in an operation mode, such as a call mode, a recording mode, and a voice recognition mode. The received audio signal may be further stored in the memory 1204 or transmitted via the communication component 1218. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1216 includes one or more sensors to provide status assessments of various aspects of the apparatus 1200. For instance, the sensor component 1216 may detect an open/closed status of the apparatus 1200, relative positioning of components, e.g., the display and the keypad, of the apparatus 1200, a change in location of the apparatus 1200 or a component of the apparatus 1200, a presence or absence of the user contact with the apparatus 1200, an orientation or an acceleration/deceleration of the apparatus 1200, and a change in temperature of the apparatus 1200. The sensor component 1216 may include a proximity sensor configured to detect the presence of nearby objects without any physical contact. The sensor component 1216 may also include a light sensor, such as a CMOS or CCD image sensor, for use in imaging applications. In some embodiments, the sensor component 1216 may also include an accelerometer sensor, a gyroscope sensor, a magnetic sensor, a pressure sensor, or a temperature sensor.

The communication component 1218 is configured to facilitate communication, wired or wirelessly, between the apparatus 1200 and other devices. The apparatus 1200 can access a wireless network based on a communication standard, such as WIFI, 2G, 3G, 4G, 5G or 6G, or a combination thereof. In an example embodiment, the communication component 1218 receives a broadcast signal or broadcast associated information from an external broadcast management system via a broadcast channel. In an example embodiment, the communication component 1218 further includes a Near Field Communication (NFC) module to facilitate short-range communications. For example, the NFC module may be implemented based on a Radio Frequency Identification (RFID) technology, an Infrared Data Association (IrDA) technology, an Ultra-Wideband (UWB) technology, a Bluetooth (BT) technology, and other technologies.

In embodiments of the present disclosure, the apparatus 1200 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors, or other electronic components, for performing the method for receiving the signal on the terminal side as described above.

In embodiments of the present disclosure, there is also provided a non-transitory machine readable storage medium including instructions, such as the memory 1204 including the instructions, executable by the processor 1220 in the apparatus 1200, for performing the method for receiving the signal as described above. For example, the non-transitory computer readable storage medium may be a ROM, a RAM, a CD-ROM, a magnetic tape, a floppy disc, an optical data storage device, and the like.

Correspondingly, the present disclosure further provides an apparatus for sending a signal, including:

a processor; and
a memory configured to store processor-executable instructions;
the processor is configured to execute any method for sending the signal on the network device side as described above.

As shown in FIG. 13, which shows a schematic structural diagram of an apparatus 1300 for sending a signal according to an example embodiment, the apparatus 1300 may be provided as the network device. Referring to FIG. 13, the apparatus 1300 includes a processing component 1322, a wireless transmitting/receiving component 1324, an antenna component 1326, and a signal processing part specific to a wireless interface. The processing component 1322 may further include at least one processor.

One of processors in the processing component 1322 may be configured to perform any method for sending the signal as described above.

Other embodiments of the present disclosure will be apparent to those skilled in the art from consideration of the specification and practice of the present disclosure disclosed herein. The present disclosure is intended to cover any variations, uses, or adaptations of the present disclosure, which are in accordance with the general principles of the present disclosure and include common general knowledge or conventional technical means in the art that are not disclosed in the present disclosure. The specification and embodiments are illustrative, and the real scope and spirit of the present disclosure is defined by the appended claims.

It should be understood that the present disclosure is not limited to the precise structures that have been

# EP 4 727 041 A1

described above and shown in the drawings, and various modifications and changes can be made without departing from the scope thereof. The scope of the present disclosure is limited only by the appended claims.

**Claims**

1. A method for receiving a signal, comprising:

   receiving indication signaling sent by a network device, wherein the indication signaling is configured to determine a first spatial element pattern activated by the network device;
   determining a first port that is active in the first spatial element pattern;
   determining, based on a mapping relationship between different ports and different Resource Elements (REs), a first RE corresponding to each first port; and
   receiving, on each first RE, a downlink signal sent by the network device through a corresponding first port.

2. The method according to claim 1, wherein the indication signaling is configured to indicate:
   a first bitmap, wherein each bit comprised in the first bitmap corresponds to a state of a port group, and each port group comprises one or more ports.

3. The method according to claim 1, wherein the method further comprises:

   determining, based on first configuration signaling sent by the network device, a plurality of spatial element patterns; or
   determining, based on a protocol predefined manner, the plurality of spatial element patterns.

4. The method according to claim 3, wherein the first configuration signaling comprises at least one of:

   first Radio Resource Control (RRC) signaling; or
   a first Media Access Control Control Element (MAC CE).

5. The method according to claim 3 or 4, wherein the indication signaling is configured to indicate:
   a first index value, wherein the first index value is an index value in an index value set, and index values comprised in the index value set are in a one-to-one correspondence with the plurality of spatial element patterns.

6. The method according to claim 5, wherein the method further comprises:
   determining a spatial element pattern corresponding to the first index value from the plurality of spatial element patterns as the first spatial element pattern.

7. The method according to claim 6, wherein the first spatial element pattern corresponds to a first bitmap, each bit comprised in the first bitmap corresponds to a state of a port group, and each port group comprises one or more ports.

8. The method according to claim 2 or 7, wherein determining the first port that is active in the first spatial element pattern comprises:

   determining a port group whose bit value is a first value in the first bitmap as a first port group; and
   determining a port comprised in the first port group as the first port that is active.

9. The method according to claim 1, wherein the method further comprises:

   determining, based on second configuration signaling sent by the network device, a set of numbers of ports; or
   determining, based on a protocol predefined manner, the set of numbers of ports.

10. The method according to claim 9, wherein the second configuration signaling comprises at least one of:

    second RRC signaling; or
    a second MAC CE.

11. The method according to claim 9 or 10, wherein the indication signaling is configured to indicate:

a first number, wherein the first number is a number in the set of numbers of ports.

12. The method according to claim 11, wherein determining the first port that is active in the first spatial element pattern comprises:

determining the first number of ports in descending or ascending order of port numbers; and
determining the first number of ports as the first port that is active.

13. The method according to any one of claims 1-12, wherein the indication signaling comprises at least one of:

a third MAC CE; or
Downlink Control Information (DCI).

14. The method according to any one of claims 1-13, wherein the indication signaling comprises at least one of:

UE-specific signaling;
signaling common to a plurality of terminals within the same cell; or
signaling common to a plurality of terminals within the same terminal group.

15. The method according to claim 1, wherein the downlink signal is a periodically transmitted downlink signal, and the method further comprises:
in response to receiving third configuration signaling but not receiving the indication signaling, receiving the downlink signal on each second RE, wherein the third configuration signaling is configured to configure the number of ports for the network device to transmit the downlink signal, each second RE is determined based on each second port that is active, and the number of second ports is equal to the number of ports.

16. The method according to claim 1, wherein the downlink signal is a semi-persistent scheduling downlink signal, or the downlink signal is an aperiodically transmitted downlink signal, and the method further comprises:
in response to receiving third configuration signaling but not receiving triggering signaling, not receiving the downlink signal, wherein the third configuration signaling message is configured to configure the number of ports for the network device to transmit the downlink signal, and the triggering signaling is configured to trigger the terminal to receive the downlink signal.

17. The method according to claim 16, wherein the method further comprises:
in response to receiving the triggering signaling but not receiving the indication signaling, receiving the downlink signal on each second RE, wherein each second RE is determined based on each second port that is active, and the number of second ports is equal to the number of ports.

18. The method according to claim 16, wherein the method further comprises:
in response to receiving the triggering signaling but not receiving the indication signaling, not receiving the downlink signal.

19. The method according to claim 16, wherein the triggering signaling and the indication signaling are the same signaling.

20. A method for sending a signal, comprising:

determining a first spatial element pattern that is activated;
sending indication signaling to a terminal, wherein the indication signaling is configured to determine the first spatial element pattern activated by a network device;
determining, based on a mapping relationship between different ports and different Resource Elements (REs), a first RE corresponding to each first port, wherein the first port is a port that is active in the first spatial element pattern; and
sending, on each first RE, a downlink signal to the terminal through a corresponding first port.

21. The method according to claim 19, wherein the indication signaling is configured to indicate:
a first bitmap, wherein each bit comprised in the first bitmap corresponds to a state of a port group, and each port group comprises one or more ports.

**22.** The method according to claim 20, wherein the method further comprises:

sending first configuration signaling to the terminal, wherein the first configuration signaling is configured to configure a plurality of spatial element patterns; or,
determining, based on a protocol predefined manner, the plurality of spatial element patterns.

**23.** The method according to claim 22, wherein the first configuration signaling comprises at least one of:

first Radio Resource Control (RRC) signaling; or
a first Media Access Control Control Element (MAC CE).

**24.** The method according to claim 22 or 23, wherein determining the first spatial element pattern comprises:

determining the first spatial element pattern from the plurality of spatial element patterns; and
the method further comprises:
determining a first index value corresponding to the first spatial element pattern in an index value set, wherein index values comprised in the index value set are in a one-to-one correspondence with the plurality of spatial element patterns.

**25.** The method according to claim 24, wherein the indication signaling is configured to indicate:
the first index value.

**26.** The method according to claim 24, wherein the first spatial element pattern corresponds to a first bitmap, each bit comprised in the first bitmap corresponds to a state of a port group, and each port group comprises one or more ports.

**27.** The method according to claim 21 or 26, wherein in the first bitmap, a bit value corresponding to a port group to which the first port belongs is a first value.

**28.** The method according to claim 20, wherein the method further comprises:

sending second configuration signaling to the terminal, wherein the second configuration signaling is configured to configure a set of numbers of ports; or
determining, based on a protocol predefined manner, the set of numbers of ports.

**29.** The method according to claim 28, wherein the second configuration signaling comprises at least one of:

second RRC signaling; or
a second MAC CE.

**30.** The method according to claim 28 or 29, wherein the method further comprises:

determining a first number of ports in descending or ascending order of port numbers; and
determining the first number of ports as the first port that is active.

**31.** The method according to claim 30, wherein the indication signaling is configured to indicate:
the first number.

**32.** The method according to any one of claims 20-31, wherein the indication signaling comprises at least one of:

a third MAC CE; or
Downlink Control Information (DCI).

**33.** The method according to any one of claims 20-32, wherein the indication signaling comprises at least one of:

UE-specific signaling;
signaling common to a plurality of terminals within the same cell; or
signaling common to a plurality of terminals within the same terminal group.

34. The method according to claim 20, wherein the downlink signal is a periodically transmitted downlink signal, and the method further comprises:
in response to sending third configuration signaling to the terminal but not sending the indication signaling, sending the downlink signal to the terminal on each second RE, wherein the third configuration signaling is configured to configure the number of ports for the network device to transmit the downlink signal, each second RE is determined based on each second port that is active, and the number of second ports is equal to the number of ports.

35. The method according to claim 20, wherein the downlink signal is a semi-persistent scheduling downlink signal, or the downlink signal is an aperiodically transmitted downlink signal, and the method further comprises:
in response to sending third configuration signaling to the terminal but not sending triggering signaling, not sending the downlink signal to the terminal, wherein the third configuration signaling message is configured to configure the number of ports for the network device to transmit the downlink signal, and the triggering signaling is configured to trigger the terminal to receive the downlink signal.

36. The method according to claim 35, wherein the method further comprises:
in response to sending the triggering signaling to the terminal but not sending the indication signaling, sending the downlink signal to the terminal on each second RE, wherein each second RE is determined based on each second port that is active, and the number of second ports is equal to the number of ports.

37. The method according to claim 35, wherein the method further comprises:
in response to sending the triggering signaling to the terminal but not sending the indication signaling, not sending the downlink signal to the terminal.

38. The method according to claim 35, wherein the triggering signaling and the indication signaling are the same signaling.

39. An apparatus for receiving a signal, comprising:

a first receiving module, configured to receive indication signaling sent by a network device, wherein the indication signaling is configured to determine a first spatial element pattern activated by the network device;
a first determination module, configured to determine a first port that is active in the first spatial element pattern;
a second determination module, configured to determine, based on a mapping relationship between different ports and different Resource Elements (REs), a first RE corresponding to each first port; and
a second receiving module, configured to receive, on each first RE, a downlink signal sent by the network device through a corresponding first port.

40. An apparatus for sending a signal, comprising:

a third determination module, configured to determine a first spatial element pattern that is activated;
a first sending module, configured to send indication signaling to a terminal, wherein the indication signaling is configured to determine the first spatial element pattern activated by a network device;
a fourth determination module, configured to determine, based on a mapping relationship between different ports and different Resource Elements (REs), a first RE corresponding to each first port, wherein the first port is a port that is active in the first spatial element pattern; and
a second sending module, configured to send, on each first RE, a downlink signal to the terminal through a corresponding first port.

41. A computer-readable storage medium having a computer program stored thereon, wherein the computer program is configured to execute the method for receiving the signal according to any one of claims 1-19.

42. A computer-readable storage medium having a computer program stored thereon, wherein the computer program is configured to execute the method for sending the signal according to any one of claims 20-38.

43. An apparatus for receiving a signal, comprising:

a processor; and
a memory configured to store processor-executable instructions;
wherein the processor is configured to perform the method for receiving the signal according to any one of claims 1-19.

**44.** An apparatus for sending a signal, comprising:

a processor; and
a memory configured to store processor-executable instructions;
wherein the processor is configured to perform the method for sending the signal according to any one of claims 20-38.

P=3001
P=3000

P=3031

P=3001
P=3000

Muted

FIG. 1

Receive indication signaling sent by a network device, the indication signaling is configured to determine a first spatial element pattern activated by the network device — 201

Determine a first port that is active in the first spatial element pattern — 202

Determine, based on a mapping relationship between different ports and different Resource Elements (REs), a first RE corresponding to each first port — 203

Receive, on each first RE, a downlink signal sent by the network device through a corresponding first port — 204

FIG. 2

| | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 11 | | | | | | | | | | | | | | |
| 10 | | | | | | | | | | | | | | |
| 9 | | | $W_f$ (1) | →P3006, p3007 | | | | | | | | | | |
| 8 | | | $W_f$ (0) | | | | | | | | | | | |
| 7 | | | $W_f$ (1) | →P3004, p3005 | | | | | | | | | | |
| 6 | | | $W_f$ (0) | | | | | | | | | | | |
| 5 | | | $W_f$ (1) | →P3002, p3003 | | | | | | | | | | |
| 4 | | | $W_f$ (0) | | | | | | | | | | | |
| 3 | | | $W_f$ (1) | → P3000, p3001 | | | | | | | | | | |
| 2 | | | $W_f$ (0) | | | | | | | | | | | |
| 1 | | | | | | | | | | | | | | |
| 0 | | | | | | | | | | | | | | |

FIG. 3

```
In response to receiving third configuration signaling
and not receiving indication signaling, receive a        401
downlink signal on each second RE
```

FIG. 4

```
In response to receiving third configuration signaling but
not receiving triggering signaling, not receive a            501
downlink signal
```

```
In response to receiving the triggering signaling but not
receiving indication signaling, receive the downlink         502
signal on each second RE
```

FIG. 5A

In response to receiving third configuration signaling but not receiving triggering signaling, not receive a downlink signal 〜 501

↓

In response to receiving the triggering signaling and not receiving indication signaling, not receive the downlink signal 〜 502'

FIG. 5B

In response to receiving third configuration signaling but not receiving triggering signaling, not receive a downlink signal 〜 501"

FIG. 5C

Determine a first spatial element pattern that is activated 〜 601

↓

Send indication signaling to a terminal, the indication signaling is configured to determine the first spatial element pattern activated by a network device 〜 602

↓

Determine, based on a mapping relationship between different ports and different Resource Elements (REs), a first RE corresponding to each first port, the first port is a port that is active in the first spatial element pattern 〜 603

↓

Send, on each first RE, a downlink signal to the terminal through a corresponding first port 〜 604

FIG. 6

In response to sending third configuration signaling to a terminal but not sending indication signaling, send a downlink signal to the terminal on each second RE 〜 701

FIG. 7

In response to sending third configuration signaling to a terminal but not sending triggering signaling, not send a downlink signal to the terminal — 801

In response to sending the triggering signaling to the terminal but not sending indication signaling, send the downlink signal to the terminal on each second RE — 802

FIG. 8A

In response to sending third configuration signaling to a terminal but not sending triggering signaling, not send a downlink signal to the terminal — 801

In response to receiving the triggering signaling and not receiving indication signaling, not send the downlink signal — 802'

FIG. 8B

In response to sending third configuration signaling to a terminal but not sending triggering signaling, not send a downlink signal to the terminal — 801"

FIG. 8C

| | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 11 | | | | | | | | | | | | | | |
| 10 | | | | | | | | | | | | | | |
| 9 | | | | | | | | | | | | | | |
| 8 | | | | | | | | | | | | | | |
| 7 | | | | | | | | | | | | | | |
| 6 | | | | | | | | | | | | | | |
| 5 | | | $W_f(1)$ | P3002, p3003 | | | | | | | | | | |
| 4 | | | $W_f(0)$ | | | | | | | | | | | |
| 3 | | | $W_f(1)$ | P3000, p3001 | | | | | | | | | | |
| 2 | | | $W_f(0)$ | | | | | | | | | | | |
| 1 | | | | | | | | | | | | | | |
| 0 | | | | | | | | | | | | | | |

FIG. 9

Apparatus for receiving a signal

First receiving module — 1001

First determination module — 1002

Second determination module — 1003

Second receiving module — 1004

FIG. 10

Apparatus for sending a signal

Third determination module — 1101

First sending module — 1102

Fourth determination module — 1103

Second sending module — 1104

FIG. 11

FIG. 12

FIG. 13

## INTERNATIONAL SEARCH REPORT

| International application No. |
|---|
| **PCT/CN2023/099553** |

### A. CLASSIFICATION OF SUBJECT MATTER

H04L1/00(2006.01)i; H04W72/231(2023.01)i

According to International Patent Classification (IPC) or to both national classification and IPC

### B. FIELDS SEARCHED

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

3GPP, CNTXT, ENTXT, ENTXTC, WPABS, DWPI, VCN, CNKI: 空间单元, spatial element, 模型, 类型, model, pattern, 端口, port, 激活, activate, 资源单元, RE, resource element, 对应, 映射, mapping, 下行, downlink, DL, 能量, 功率, 节省, 节约, energy saving

### C. DOCUMENTS CONSIDERED TO BE RELEVANT

| Category* | Citation of document, with indication, where appropriate, of the relevant passages | Relevant to claim No. |
|---|---|---|
| A | CATT. "R1-2300692 Network Energy Saving techniques in spatial and power domain" *3GPP TSG RAN WG1 #112*, 03 March 2023 (2023-03-03), section 2 | 1-44 |
| A | INTEL CORP. "R1-2205140 Discussion Summary for energy saving techniques of NW energy saving SI" *3GPP TSG RAN WG1 Meeting #109-e*, 20 May 2022 (2022-05-20), entire document | 1-44 |
| A | XIAOMI. "R1-2300587 Discussion on techniques in spatial and power domains" *3GPP TSG RAN WG1 #112*, 03 March 2023 (2023-03-03), entire document | 1-44 |
| A | ETRI. "R1-2301047 Network energy saving techniques in spatial domain" *3GPP TSG RAN WG1 #112*, 03 March 2023 (2023-03-03), entire document | 1-44 |
| A | US 2023006763 A1 (QUALCOMM INC.) 05 January 2023 (2023-01-05) entire document | 1-44 |

☑ Further documents are listed in the continuation of Box C.    ☑ See patent family annex.

| | |
|---|---|
| \*   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **17 December 2023** | **21 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/099553**

### C. DOCUMENTS CONSIDERED TO BE RELEVANT

| Category* | Citation of document, with indication, where appropriate, of the relevant passages | Relevant to claim No. |
|---|---|---|
| A | US 2018287682 A1 (SAMSUNG ELECTRONICS CO., LTD.) 04 October 2018 (2018-10-04) entire document | 1-44 |
| A | WO 2022047759 A1 (QUALCOMM INC.) 10 March 2022 (2022-03-10) entire document | 1-44 |

Form PCT/ISA/210 (second sheet) (July 2022)

**INTERNATIONAL SEARCH REPORT**
Information on patent family members

International application No.

**PCT/CN2023/099553**

| Patent document cited in search report | | | Publication date (day/month/year) | Patent family member(s) | | | Publication date (day/month/year) |
|---|---|---|---|---|---|---|---|
| US | 2023006763 | A1 | 05 January 2023 | US | 11695499 | B2 | 04 July 2023 |
| | | | | WO | 2023278206 | A1 | 05 January 2023 |
| US | 2018287682 | A1 | 04 October 2018 | US | 10735072 | B2 | 04 August 2020 |
| | | | | WO | 2018174641 | A2 | 27 September 2018 |
| | | | | WO | 2018174641 | A3 | 01 November 2018 |
| | | | | KR | 20180108357 | A | 04 October 2018 |
| | | | | EP | 3563510 | A2 | 06 November 2019 |
| WO | 2022047759 | A1 | 10 March 2022 | | None | | |

Form PCT/ISA/210 (patent family annex) (July 2022)